# FASCICULE DE BREVET EUROPEEN

(11) **EP 1 493 264 B1**
(45) Date de publication et mention de la délivrance du brevet: **13.06.2007**
(21) Numéro de dépôt: 03740552.9
(22) Date de dépôt: 02.04.2003
(51) Int. Cl.: H04L 29/08

(54) **SYSTEME DE TELECOMMUNICATION VIA UN RESEAU PRINCIPAL DE TYPE INTERNET ET UN TERMINAL CABLE PERMETTANT UN ACHEMINEMENT GEOGRAPHIQUEMENT PERTINENT DES COMMUNICATIONS**
TELEKOMMUNIKATIONSSYSTEM ÜBER EIN HAUPTNETZWERK DES INTERNET-TYPS UND VERDRAHTETES ENDGERÄT FÜR DAS RELEVANTE GEOGRAPHISCHE KOMMUNIKATIONS-ROUTING
TELECOMMUNICATION SYSTEM VIA A MAIN INTERNET-TYPE NETWORK AND A WIRED TERMINAL FOR RELEVANT GEOGRAPHICAL COMMUNICATION ROUTING

(30) Priorité: 09.04.2002 FR 0204557
(43) Date de publication de la demande: 05.01.2005
(73) Titulaire: FRANCE TELECOM, 75015 Paris (FR)
(72) Inventeur: LANGLAIS, Mathieu, F-22300 Lannion (FR)
(74) Mandataire: Maillet, Alain
(86) Numéro de dépôt international: PCT/FR2003/001022
(87) Numéro de publication internationale: WO 2003/085933

(56) Documents cités:
- WO-A-00/67450
- WO-A-01/37517
- WO-A-99/34305
- NOTTINGHAM M: "On defining a role for demand-driven surrogate origin servers" COMPUTER COMMUNICATIONS, ELSEVIER SCIENCE PUBLISHERS BV, AMSTERDAM, NL, vol. 24, no. 2, 1 février 2000 (2000-02-01), pages 215-221, XP004228463 ISSN: 0140-3664

## Description

La présente invention concerne un système de télécommunication incluant :
au moins un terminal destiné à échanger des données avec un correspondant via un réseau de communication principal de type Internet muni d'au moins un contrôleur d'accès destiné à recevoir lesdites données et d'au moins un contrôleur d'appel destiné à acheminer lesdites données vers le correspondant, et
au moins un réseau de communication auxiliaire destiné à réaliser une interface entre ledit terminal et ledit contrôleur d'accès.

Les données véhiculées au sein de tels systèmes peuvent être par exemple des données vocales, audio/vidéo ou textuelles.

Dans un grand nombre d'applications, la localisation géographique du terminal appelant peut constituer une information très utile. Cette information est par exemple indispensable lorsqu'un utilisateur de ce terminal compose un numéro abrégé pour être mis en relation rapidement avec un organisme apte à intervenir à l'endroit depuis lequel ledit utilisateur émet son appel, comme des services de lutte contre les incendies, ou encore de police ou d'intervention médicale d'urgence.

La demande de brevet internationale. WO 01/43395 décrit un système de télécommunication mettant en oeuvre un protocole de type Mobile IP, c'est-à-dire dans lequel l'utilisateur dispose d'un terminal mobile, par exemple un radiotéléphone, destiné à être mis en relation avec son correspondant via un réseau principal de type Internet, le réseau de communication auxiliaire étant constitué par un réseau de téléphonie mobile de type cellulaire. Ce système connu rend possible une localisation géographique de l'appelant et une prise en compte de cette information de localisation en vue d'un acheminement pertinent des données par le contrôleur l'appel, c'est-à-dire vers une adresse de destination adaptée à ladite localisation géographique. Ce système de télécommunication exploite à cette fin des ressources offertes par le réseau cellulaire conformément à un protocole qui prévoit que chaque terminal mobile est apte à déterminer sa propre localisation géographique au moyen de liaisons qu'il entretient avec le réseau cellulaire. Le terminal mobile peut alors fournir sur demande cette information de localisation au contrôleur d'appel en vue d'un acheminement pertinent de l'appel.

Dans un système de télécommunication mettant en oeuvre un réseau câblé, au lieu d'un réseau cellulaire, pour réaliser une interface entre les terminaux et ledit contrôleur d'accès, les terminaux ne disposent pas de ressources pour déterminer par eux-mêmes leur localisation géographique, qui constitue cependant une information tout aussi importante que dans le cas du système de télécommunication connu.

Un signal contenant des données destinées à être acheminées depuis un terminal vers un correspondant via un réseau de communication principale de type Internet et un réseau de communication auxiliaire câblé fait l'objet de la demande de brevet internationale WO 01/37517.

L'un des buts de l'invention est de permettre un acheminement pertinent de données émises par un terminal via un réseau principal de type Internet et un réseau auxiliaire câblé réalisant une interface entre ledit terminal et ledit réseau principal, en proposant un système de télécommunication dans lequel une localisation géographique dudit terminal est rendue possible.

En effet, un système de télécommunication conforme au paragraphe introductif est caractérisé selon l'invention en ce que, le réseau de communication auxiliaire étant un réseau de communication câblé, le système inclut en outre des moyens de gestion de localisation, séparés du terminal, et aptes à générer des informations de localisation représentatives d'une localisation géographique dudit terminal et à transmettre lesdites informations de localisation au contrôleur d'appel.

Les moyens de gestion de localisation pallient l'incapacité du terminal à identifier par lui-même sa localisation. Les informations de localisation relatives à un terminal pourront être constituées par un identifiant d'un équipement, par exemple une ligne téléphonique, auquel est relié le terminal considéré, un numéro d'abonné téléphonique associé à cet identifiant, une adresse administrative associée à cet identifiant, ou encore des coordonnées géographiques indiquant une position, relevée par exemple au moyen d'un système satellitaire de type GPS, de la connexion entre le terminal et l'équipement.

Selon une variante de l'invention, les moyens de gestion de localisation pourront en outre avantageusement être aptes à collecter des informations dites de profil, représentatives d'une qualité de communication qui doit être fournie à un utilisateur du terminal.

Ces informations de profil sont différentes des informations de localisation, mais peuvent être utilisées en combinaison avec les informations de localisation pour améliorer le fonctionnement du système de télécommunication selon l'invention. Par exemple, le système pourra être muni d'un contrôleur de ressources destiné à assurer à chaque utilisateur une qualité de communication conforme à des préférences préalablement définies par ledit utilisateur et rendues manifestes par les informations de profil. Le contrôleur de ressources opérera alors en permanence une analyse de l'état du réseau en cherchant à répartir une charge constituée par un débit global d'informations instantanément acheminées au travers du système de télécommunication, en veillant à ce que des exigences particulières en termes de qualité de service, exprimées par exemple par des valeurs de débit minimum de communication, pour le respect desquelles certains utilisateurs ont pu contracter un abonnement particulier, soient autant que possible prises en compte. Pour ce faire, le contrôleur de ressources doit connaître des informations de profil relatives aux exigences et aux équipements des utilisateurs qui sont effectivement connectés au réseau, de manière à déterminer quels utilisateurs le contrôleur de ressources peut et doit privilégier, et dans quelle mesure. Ces informations de profil d'un utilisateur seront par exemple constituées par une identification propre à l'utilisateur permettant son accès au réseau principal, un identifiant d'un certain type d'accès au réseau principal que l'utilisateur aura choisi, ou encore des paramètres réseau spécifiques à cet utilisateur. Les informations de profil pourront en outre être représentatives du type de matériel constituant le terminal de l'utilisateur, en particulier d'une taille d'écran, ou encore d'un degré d'aptitude au traitement de données multimédia.

Les informations de localisation et de profil pourront en outre être conjointement utilisées par un fournisseur d'accès au réseau principal pour facturer aux utilisateurs qui y sont abonnés des coûts réels de leurs communications, qui sont entre autres liés à la distance séparant physiquement un utilisateur de son correspondant, d'une part, et aux ressources qui auront été mises en oeuvre pour assurer à cet utilisateur la qualité de communication qu'il a exigée, d'autre part.

Dans un mode de réalisation particulier de l'invention, les moyens de gestion de localisation incluent une base de données apte à collecter des informations depuis au moins un contrôleur d'accès, d'une part, et depuis un système d'information d'au moins un opérateur auquel est abonné l'utilisateur du terminal, d'autre part.

L'invention concerne également, en tant qu'élément utile à sa mise en oeuvre, un support d'enregistrement de données destiné à contenir une base de données incluant des informations collectées par les moyens de gestion de localisation inclus dans un système de télécommunication tel que décrit ci-dessus.

L'invention concerne en outre, en tant qu'autre élément utile à sa mise en oeuvre, un serveur incluant un support d'enregistrement tel que décrit ci-dessus.

L'invention concerne aussi, en tant qu'entité physique résultant de sa mise en oeuvre, un signal contenant des données destinées à être acheminées depuis un terminal vers un correspondant via un réseau de communication principal de type Internet et un réseau de communication auxiliaire câblé, signal contenant en outre des informations de localisation, représentatives d'une localisation géographique dudit terminal, et générées par des moyens de gestion de localisation.

Sous un aspect plus général, l'invention concerne également un procédé de transmission de données entre au moins un terminal et un correspondant au moyen d'un système de télécommunication incluant :
un réseau de communication principal de type Internet muni d'au moins un contrôleur d'accès destiné à recevoir lesdites données et d'au moins un contrôleur d'appel destiner à acheminer lesdites données vers le correspondant, et
au moins un réseau de communication câblé auxiliaire destiné à réaliser une interface entre ledit terminal et ledit contrôleur d'accès,
procédé caractérisé en ce qu'il inclut une étape de génération d'informations de localisation représentatives d'une localisation géographique dudit terminal et à transmettre lesdites informations au contrôleur d'appel.

Selon une variante de cet aspect de l'invention, le procédé décrit ci-dessus inclut en outre une étape de génération d'informations de profil, représentatives d'une qualité de communication qui doit être fournie à un utilisateur du terminal.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 est un schéma fonctionnel décrivant un système de télécommunication selon un mode de réalisation particulier de l'invention, et
La Fig.2 est un organigramme décrivant un procédé de transmission de données mis en oeuvre dans un tel système.

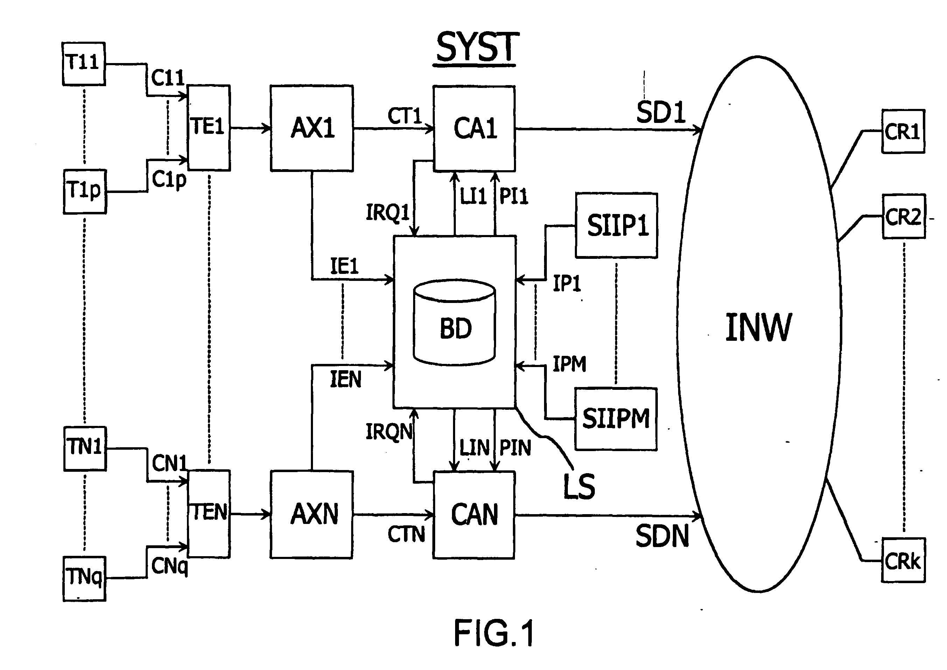

La Fig.1 représente schématiquement un système de télécommunication SYST incluant une pluralité de terminaux T11...T1p...TN1...TNp destinés à échanger des données avec des correspondants CR1...CRk via un réseau de communication principal INW de type Internet muni de contrôleurs d'accès AX1...AXN destinés à recevoir lesdites données, et de contrôleurs d'appel CA1...CAN destinés à acheminer lesdites données vers les correspondants CR1...CRk.

Dans l'exemple décrit ici, les correspondants CR1...CR2 et les terminaux T11...T1p...TN1...TNp sont décrits comme des entités distinctes pour faciliter une bonne compréhension de l'invention. Cependant, dans la plupart des applications auxquelles un tel système SYST est destiné, chaque terminal pourra indifféremment jouer un rôle d'émetteur de données, comme c'est le cas ici, et de correspondant.

Un terminal pourra par exemple être constitué par un téléphoner auquel cas les données à transmettre seront essentiellement de nature vocale, ou encore par un ordinateur muni d'un modulateur/démodulateur et éventuellement d'un microphone et/ou d'un appareil de prise de vues, auquel cas les données à transmettre pourront être de nature textuelle, audio et/ou vidéo.

Le système SYST inclut en outre un réseau de communication auxiliaire câblé comprenant ici des équipements téléphoniques TE1...TEN et destiné à réaliser une interface entre lesdits terminaux T11...T1p...TN1...TNp et lesdits contrôleurs d'accès AX1...AXN. Ces équipements téléphoniques pourront par exemple être constitués par des autocommutateurs, connus en eux-mêmes de l'homme du métier, et munis chacun d'au moins un modulateur/démodulateur formant une passerelle pour assurer un transfert de données vers ou depuis le réseau de communication principal INW.

Le système SYST selon l'invention inclut de plus des moyens de gestion de localisation LS, séparés desdits terminaux T11...T1p...TN1...TNp, et aptes à générer des informations de localisation LIi représentatives de localisations géographiques desdits terminaux et à transmettre lesdites informations LIi aux contrôleurs d'appel CA1.

Les moyens de localisation LS pallient l'incapacité des terminaux T11...T1p...TN1...TNp à identifier par eux-mêmes leur localisation. Les informations de localisation L11 relatives à un terminal T11...T1p pourront être constituées par un identifiant d'une ligne téléphonique reliant le terminal considéré à l'équipement TE1, un numéro d'abonné téléphonique associé à cet identifiant, une adresse administrative associée à cet identifiant, ou encore des coordonnées géographiques indiquant une position, relevée par exemple au moyen d'un système satellitaire de type GPS, de la connexion entre le terminal T11...T1p et l'équipement TE1.

Lorsqu'un terminal appelant T11...T1p sollicite l'établissement d'une communication avec un correspondant, ledit terminal émet vers un contrôleur d'accès AX1 une requête de connexion C11...C1p. Le contrôleur d'accès AX1 identifie alors l'origine géographique de cette requête au moyen du numéro de ligne d'un équipement téléphonique TE1 par l'intermédiaire duquel ladite requête C11...C1p est parvenue audit contrôleur d'accès AX1, et éventuellement au moyen d'une adresse administrative correspondant à un mot de passe annexé à ladite requête. Ces informations, dites informations d'accès IE1, sont alors envoyées aux moyens de gestion de localisation LS par le contrôleur d'accès AX1.

Dans ce mode de réalisation particulier de l'invention, les moyens de gestion de localisation LS, qui comprennent ici un serveur incluant un support mémoire contenant une base de données BD, sont en outre aptes à consulter diverses sources d'information, associées à des bases de données SIIP1...SIIPM appartenant à des opérateurs de télécommunication avec lesquels l'utilisateur du terminal est susceptible d'avoir contracté un abonnement lui autorisant un accès au système de communication principal INW, afin d'en extraire des informations d'abonnement IP1...IPM, et à intégrer lesdites informations d'abonnement dans la base de données BD.

Après authentification de l'identité de son utilisateur par le contrôleur d'accès AX1, le terminal appelant T11...T1p se verra attribuer une adresse de type adresse Internet et connecté au réseau de communication principal INW, et pourra émettre des signaux de données CT1 vers son correspondant.

Les signaux de données CT1 ... CTN ont vocation à transiter via les contrôleurs d'accès AX1...AXN en direction des contrôleurs d'appel CA1...CAN. Si un contrôleur d'appel CAi (pour i=1 à N) identifie un signal de données CTi comme un signal dont l'acheminement ultérieur dépend de la localisation géographique du terminal appelant, par exemple un appel d'urgence au moyen d'un numéro abrégé, le contrôleur d'appel CAi émet vers les moyens de gestion de localisation LS une requête d'informations IRQi aux fins de se voir communiquer des informations de localisation LIi relatives à la localisation géographique dudit terminal appelant.

Le contrôleur d'appel CAi pourra en outre, et de manière optionnelle, solliciter par cette même requête d'informations IRQi ou une autre requête de même type des informations de profil PIi, représentatives de préférences préalablement définies par l'utilisateur du terminal appelant, par exemple d'une qualité de service qui devra être fournie à cet utilisateur.

Après réception d'une telle requête IRQi, les moyens de localisation LS analysent le contenu des informations d'accès IE1...IEN fournies par les contrôleurs d'accès AX1...AXN, d'une part, et des informations d'abonnement IP1...IPM, d'autre part, et génèrent, sur la base desdites informations d'accès et d'abonnement, les informations de localisation LI1, et optionnellement les informations de profil PI1, qui sont ensuite transmises au contrôleur d'appel CAi qui en a fait la demande. Ce contrôleur d'appel CAi intègre alors les informations de localisation LI1, et optionnellement les informations de profil PI1, au signal de données CTi qu'il a reçu depuis l'équipement téléphonique TEi via le contrôleur d'accès AXi, et génère ainsi un signal SDi porteur de données émises par le terminal appelant, d'une part, et d'informations de localisation et de profil relatives à ce terminal, d'autre part. Ce signal SDi constitue alors une entité autonome contenant tous les éléments d'ordre géographique qui sont nécessaires à son acheminement ultérieur vers son destinataire final via le réseau principal INW, ainsi que des éléments contribuant à une gestion efficace des ressources du système de télécommunication SYST.

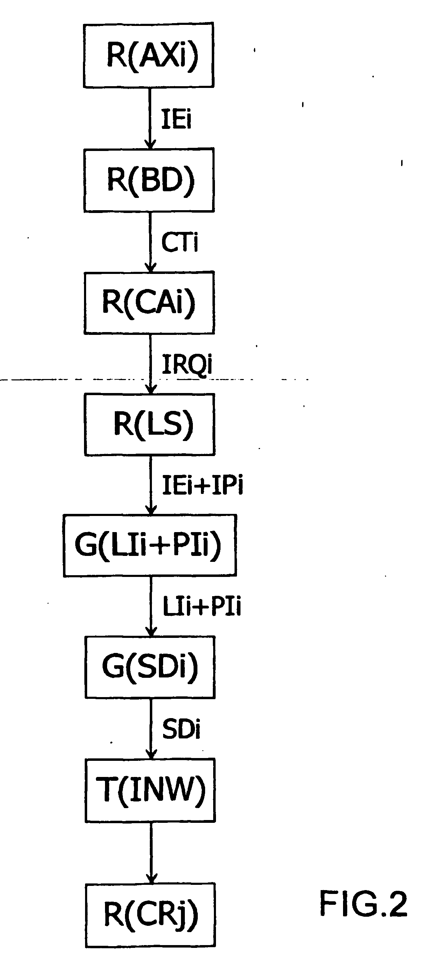

La Fig.2 illustre, sous forme d'organigramme, un procédé de transmission de données mis en oeuvre dans un système de télécommunication tel que décrit ci-dessus.

Au cours d'une première étape R(AXi), un contrôleur d'accès AXi reçoit une requête de connexion depuis un terminal auquel il est relié via le réseau auxiliaire câblé. Ce contrôleur d'accès AXi envoie alors les informations d'accès IEi aux moyens de gestion de localisation LS.

Au cours d'une étape suivante R(BD), les informations d'accès IEi sont enregistrées dans une base de données BD incluse dans lesdits moyens de gestion de localisation LS. Un accès au réseau principal est concédé au terminal appelant, qui émet alors, via le contrôleur d'accès AXi, un signal de données CTi vers un contrôleur d'appel CAi.

Dans une étape suivante R(CAi), ledit contrôleur d'appel CAi reçoit et analyse ledit signal de données CTi afin de déterminer si une identification de la localisation géographique du terminal appelant est nécessaire à un acheminement pertinent dudit signal de données CTi. Si tel est le cas, le contrôleur d'appel CAi émet vers les moyens de localisation LS une requête d'informations IRQi aux fins de se voir communiquer des informations de localisation LIi relatives à la localisation géographique dudit terminal appelant. Le contrôleur d'appel CAi pourra en outre, et de manière optionnelle, solliciter par cette même requête d'informations IRQi ou une autre requête de même type des informations de profil PIi, représentatives de préférences préalablement définies par l'utilisateur du terminal appelant, par exemple d'une qualité de service qui devra être fournie à cet utilisateur.

Au cours d'une étape suivante R(LS), la requête IRQi est reçue par les moyens de gestion de localisation LS qui consultent alors le contenu des informations d'accès et d'abonnement IEi et IPi qui lui auront été envoyées par les contrôleurs d'accès AXi et les diverses bases de données appartenant à des opérateurs de télécommunication avec lesquels l'utilisateur du terminal est susceptible d'avoir contracté un abonnement.

Au cours d'une étape suivante G(LIi+PIi), les moyens de localisation LS génèrent les informations de localisation LIi, et optionnellement les informations de profil PIi, ainsi qu'exposé plus haut, puis transmettent lesdites informations LIi et PIi au contrôleur d'appel CAi qui en a fait la demande.

Au cours d'une étape suivante G(SDi), ledit contrôleur d'appel CAi génère un signal SDi qui intègre les données contenues dans le signal CTi et les informations de localisation LIi, et optionnellement les informations de profil PIi, formant ainsi une entité autonome contenant tous les éléments d'ordre géographique qui sont nécessaires à l'acheminement ultérieur du signal SDi, ainsi que des éléments contribuant à une gestion efficace des ressources du système de télécommunication SYST.

Au cours d'une étape suivante T(INW), ledit contrôleur d'appel CAi procède à l'émission, via le réseau principal INW, dudit signal SDi vers son destinataire CRj, qui recevra ledit signal SDi au cours d'une étape suivante R(CRj).

L'invention permet ainsi un acheminement pertinent d'appels émis par un terminal via un réseau principal de type Internet et un réseau auxiliaire câblé, bien que de tels terminaux ne disposent pas de ressources pour déterminer par eux-mêmes leur localisation géographique.

## Revendications

1. Système de télécommunication (SYST) incluant:
au moins un terminal destiné à échanger des données avec un correspondant (CR1 ...CRk) via un réseau de communication principal de type Internet (INW) muni d'au moins un contrôleur d'accès (AX1....AXN) destiné à recevoir lesdites données et d'au moins un contrôleur d'appel LCA1...CAN) destiné à acheminer lesdites données vers le correspondant, et
au moins un réseau de communication auxiliaire destiné à réaliser une interface entre ledit terminal et ledit contrôleur d'accès,
système **caractérisé en ce que**, le réseau de communication auxiliaire étant un réseau de communication câblé, le système inclut en outre des moyens de gestion de localisation (LS), séparés du terminal, et aptes à générer des informations de localisation (LI1.. . LIN) représentatives d'une localisation géographique dudit terminal et à transmettre lesdites informations au contrôleur d'appel (CA 1... CAN).

2. Système de télécommunication selon la revendication 1, dans lequel les moyens de gestion de localisation sont en outre aptes à générer des informations de profil (PI1...PIN), représentatives d'une qualité de communication qui doit être fournie à un utilisateur du terminal.

3. Système de télécommunication selon la revendication 2, incluant en outre un contrôleur de ressources destiné à assurer à chaque utilisateur une qualité de communication conforme à des préférences préalablement définies par ledit utilisateur et rendues manifestes par les informations de profil (PI1...PIN).

4. Système de télécommunication selon l'une des revendications 1 à 3, dans lequel les moyens de gestion de localisation (LS) incluent une base de données (BD) apte à collecter des informations ((IEI...IEN) et (IP1...IPM)) depuis au moins un contrôleur d'accès (AXI...AXN), d'une part, et depuis un système d'information (SIIPI...SIIPM) d'au moins un opérateur auquel est abonné l'utilisateur du terminal, d'autre part.

5. Support d'enregistrement de données pour système de télécommunication selon la revendication 1, **caractérisé en ce qu'**il contient une base de données (BD) avec des informations ((IEI...IEN) et (IP1...IPM) collectées depuis au moins un contrôleur d'accès (AXI...AXN) destiné à recevoir lesdites données dans ledit réseau de communication principal d'une part; et depuis un système d'information (SIIPI...SIIPM) d'au moins un opérateur auquel est abonné l'utilisateur du terminal d'autre part, de façon à ce que des moyens de gestion de localisation (LS) séparés du terminal, génèrent des informations de localisation (LI1...LIN) représentatives d'une localisation géographique dudit terminal et transmettent lesdites informations de localisation à un contrôleur d'appel (CA1... CAN) destiné à acheminer lesdites données vers le correspondant dans ledit réseau de communication principal.

6. Serveur pour système de télécommunication selon la revendication 1, **caractérisé en ce qu'**il comprend un support d'enregistrement selon la revendication 5.

7. Procédé de transmission de données entre au moins un terminal et un correspondant au moyen d'un système de télécommunication incluant :
un réseau de communication principal de type Internet muni d'au moins un contrôleur d'accès destiné à recevoir lesdites données et d'au moins un contrôleur d'appel destiné à acheminer lesdites données vers le correspondant, et
au moins un réseau de communication câblé auxiliaire destiné à réaliser une interface entre ledit terminal et ledit contrôleur d'accès,
procédé **caractérisé en ce qu'**il inclut une étape de génération d'informations de localisation (Lui) représentatives d'une localisation géographique dudit terminal et de transmission desdites informations (LIi) au contrôleur d'appel_

8. Procédé de transmission de données selon la revendication 7, incluant en outre une étape de génération d'informations de profil (PIi), représentatives d'une qualité de communication qui doit être fournie à un utilisateur du terminal.

## Claims

1. Telecommunication system (SYST) including:
• at least one terminal intended to exchange data with an opposite party (CR1...CRk) via a main communication network of internet type (INW) provided with at least one access controller (AX1...AXN) intended to receive the said data and with at least one call controller (CA1...CAN) intended to route the said data to the opposite party, and
• at least one auxiliary communication network intended to act as an interface between the said terminal and the said access controller,
system **characterized in that**, the auxiliary communication network being a wired communication network, the system furthermore includes location management means (LS), separate from the terminal, and able to generate location information (LI1...LIN) representative of a geographical location of the said terminal and to transmit the said information to the call controller (CA1...CAN).

2. Telecommunication system according to Claim 1, in which the location management means are furthermore able to generate profile information (PI1...PIN), representative of a quality of communication which must be provided to a user of the terminal.

3. Telecommunication system according to Claim 2, furthermore comprising a resources controller intended for affording each user a communication quality in accordance with preferences previously defined by the said user and rendered manifest by the profile information (PI1...PIN).

4. Telecommunication system according to one of Claims 1 to 3, in which the location management means (LS) include a database (BD) able to collect information ((IEI...IEN) and (IP1...IPM)) from at least one access controller (AX1...AXN), on the one hand, and from an information system (SIIPI...SIIPM) of at least one operator to which the user of the terminal subscribes, on the other hand.

5. Data recording medium for telecommunication system according to Claim 1, **characterized in that** it contains a database (BD) with information ((IEI...IEN) and (IP1...IPM)) collected from at least one access controller (AX1...AXN) intended to receive the said data in the said main communication network, on the one hand, and from an information system (SIIPI...SIIPM) of at least one operator to which the user of the terminal subscribes, on the other hand, so as to make location management means (LS) separate from the terminal, generate location information (LI1...LIN) representative of a geographical location of the said terminal and transmit the said location information to a call controller (CA1...CAN) intended to route the said data to the opposite party in the said main communication network.

6. Server for telecommunication system according to Claim 1, **characterized in that** it comprises a recording medium according to Claim 5.

7. Method of transmitting data between at least one terminal and an opposite party by means of a telecommunication system including:
• a main communication network of internet type provided with at least one access controller intended to receive the said data and with at least one call controller intended to route the said data to the opposite party, and
• at least one auxiliary wired communication network intended to act as an interface between the said terminal and the said access controller,
method **characterized in that** it includes a step of generating location information (Lui) representative of a geographical location of the said terminal and of transmitting the said information (LIi) to the call controller.

8. Method of transmitting data according to Claim 7, furthermore including a step of generating profile information (PIi), representative of a quality of communication which must be provided to a user of the terminal.

## Patentansprüche

1. Telekommunikationssystem (SYST), das enthält:
. mindestens ein Endgerät, das dazu bestimmt ist, Daten mit einem Teilnehmer (CR1 ... CRk) über ein Hauptkommunikationsnetz vom Typ Internet (INW) auszutauschen, das mit mindestens einem Zugriffskontroller (AX1 ... AXN), der dazu bestimmt ist, die Daten zu empfangen, und mit mindestens einer Anrufsteuerung (CA1 ... CAN) ausgestattet ist, die dazu bestimmt ist, die Daten zum Teilnehmer weiterzuleiten, und
. mindestens ein Hilfskommunikationsnetz, das dazu bestimmt ist, eine Schnittstelle zwischen dem Endgerät und dem Zugriffskontroller herzustellen,
**dadurch gekennzeichnet, dass** das System, wenn das Hilfskommunikationssystem ein verkabeltes Kommunikationsnetz ist, außerdem Lokalisierungsverwaltungsmittel (LS) aufweist, die vom Endgerät getrennt und in der Lage sind, Lokalisierungsinformationen (LI1 ... LIN) zu erzeugen, die für eine geographische Lokalisierung des Endgeräts repräsentativ sind, und die Informationen an die Anrufsteuerung (CA1 ... CAN) zu übertragen.

2. Telekommunikationssystem nach Anspruch 1, bei dem die Lokalisierungsverwaltungsmittel außerdem in der Lage sind, Profilinformationen (PI1 ... PIN) zu erzeugen, die für eine Kommunikationsqualität repräsentativ sind, die an einen Benutzer des Endgeräts geliefert werden soll.

3. Telekommunikationssystem nach Anspruch 2, das außerdem einen Ressourcen-Kontroller aufweist, der dazu bestimmt ist, jedem Benutzer eine Kommunikationsqualität zu gewährleisten, die vorher vom Benutzer definierten und durch die Profilinformationen (PI1 ... PIN) offenbarten Präferenzen entspricht.

4. Telekommunikationssystem nach einem der Ansprüche 1 bis 3, bei dem die Lokalisierungsverwaltungsmittel (LS) eine Datenbasis (BD) enthalten, die in der Lage ist, einerseits Informationen ((IE1 ... IEN) und (IP1 ... IPM)) ausgehend von mindestens einem Zugriffskontroller (AX1 ... AXN) und andererseits von einem Informationssystem (SIIP1 ... SIIPM) mindestens eines Betreibers zu sammeln, bei dem der Benutzer des Endgeräts abonniert ist.

5. Datenspeicherträger für ein Telekommunikationssystem nach Anspruch 1, **dadurch gekennzeichnet, dass** er eine Datenbasis (BD) mit Informationen ((IE1 ... IEN) und (IP1 ... IPM)) enthält, die einerseits ausgehend von mindestens einem Zugriffskontroller (AX1 ... AXN), der dazu bestimmt ist, die Daten im Hauptkommunikationsnetz zu empfangen, und andererseits ausgehend von einem Informationssystem (SIIP1 ... SIIPM) mindestens eines Betreibers, bei dem der Benutzer des Endgeräts abonniert ist, gesammelt werden, um es den vom Endgerät getrennten Lokalisierungsverwaltungsmitteln (LS) zu erlauben, Lokalisierungsinformationen (LI1 ... LIN) zu erzeugen, die für eine geographische Lokalisierung des Endgeräts repräsentativ sind, und die Lokalisierungsinformationen an eine Anrufsteuerung (CA1 ... CAN) zu übertragen, die dazu bestimmt ist, die Daten zum Teilnehmer im Hauptkommunikationsnetz weiterzuleiten.

6. Server für ein Telekommunikationssystem nach Anspruch 1, **dadurch gekennzeichnet, dass** er einen Speicherträger nach Anspruch 5 aufweist.

7. Verfahren zur Datenübertragung zwischen mindestens einem Endgerät und einem Teilnehmer mittels eines Telekommunikationssystems, das enthält:
. ein Hauptkommunikationsnetz vom Typ Internet, das mit mindestens einem Zugriffskontroller, der dazu bestimmt ist, die Daten zu empfangen, und mit mindestens einer Anrufsteuerung ausgestattet ist, die dazu bestimmt ist, die Daten zum Teilnehmer weiterzuleiten, und
. mindestens ein verkabeltes Hilfskommunikationsnetz, das dazu bestimmt ist, eine Schnittstelle zwischen dem Endgerät und dem Zugriffskontroller herzustellen,
wobei das Verfahren **dadurch gekennzeichnet ist, dass** es einen Schritt der Erzeugung von Lokalisierungsformationen (LIi), die für eine geographische Lokalisierung des Endgeräts repräsentativ sind, und der Übertragung der Informationen (LIi) zur Anrufsteuerung aufweist.

8. Datenübertragungsverfahren nach Anspruch 7, das außerdem einen Schritt der Erzeugung von Profilinformationen (PIi) aufweist, die für eine Kommunikationsqualität repräsentativ sind, die an einen Benutzer des Endgeräts geliefert werden soll.
